# EUROPEAN PATENT SPECIFICATION

(11) **EP 2 419 044 B1**
(45) Date of publication and mention of the grant of the patent: **20.08.2014**
(21) Application number: 10715206.8
(22) Date of filing: 15.04.2010
(51) Int. Cl.: A61C 8/00

(54) **DENTAL IMPLANT ASSEMBLY COMPRISING A MAGNETIC TEMPORARY SCREW**
DENTALER IMPLANTATAUFBAU MIT EINER MAGNETISCHEN TEMPORÄREN SCHRAUBE
VIS MAGNÉTIQUE PROVISOIRE POUR UN IMPLANT DENTAIRE

(30) Priority: 17.04.2009 IT MC20090083
(43) Date of publication of application: 22.02.2012
(73) Proprietor: SUPERCHARGED PRODUCTION S.R.L., 60019 Senigalla (AN) (IT)
(72) Inventor: BAMBINI, Fabrizio, I-60019 Senigallia (AN) (IT); SANTARELLI, Andrea, I-60035 Jesi (AN) (IT); EMANUELLI, Monica, I-60123 Ancona (IT) (IT); PUTIGNANO, Angelo, I-60100 Ancona (IT) (IT); PROCACCINI, Maurizio, I-00100 Roma (IT)
(74) Representative: Cutropia, Gianluigi
(86) International application number: PCT/EP2010/054946
(87) International publication number: WO 2010/119092

(56) References cited:
- EP-A- 1 323 394
- DE-B3-102006 021 476
- DE-C1- 4 233 605
- US-A- 6 032 677
- US-A1- 2009 029 316

## Description

The present patent application for industrial invention relates to an apparatus for dental implants.

When a patient has lost one or more teeth, for natural or accidental causes or because of dentist's extraction, rehabilitation is often carried out by means of prosthesis.

To that purpose, the dentist implants a basically cylindrical metal pin (technically defined as "implant") in the patient's bone, which acts as root for the artificial tooth to be installed. It is basically an empty cylindrical pin accessible from the upper opening, which is provided with threaded internal walls.

Once such an implant is integrated into the bone, the lowered threaded section of a metal stem, technically defined as "stump", is screwed onto it.

In case of threadless stumps, a through screw (technically defined as "retention screw") is screwed onto each implant in order to fix the stump.

In any case, such a stump is adapted to support the mobile or fixed prosthesis.

It must be noted that the application of such a stump to the corresponding implant cannot be made until the implant is efficaciously integrated and consolidated into the patient's bone. Such a consolidation presumes the healing and reconstitution of bone tissue all around the implant.

In view of the above, the implant must be maintained closed or protected for the time necessary for consolidation by means of a "covering screw" that will be removed when consolidation has been completed, leaving space to the final stump.

For the entire time necessary for consolidation, said covering screw is positioned under the gingival mucosa, suitably stitched on it by the dentist who has made the implant. This means that the removal of said covering screw can take place only following to a new incision of said gingival mucosa that, in the meantime, had cicatrized above the same screw.

A different operating method is sometimes used alternatively to this technology, according to which the closing function of the implant is entrusted to a "healing screw" that, although it is designed to be removed to leave space for the final stump, is characterized by a significant difference with respect to an ordinary covering screw.

The peculiarity of such a healing screw consists in that it is provided with higher head (compared to an ordinary covering screw) that allows for placing the gingival mucosa at higher height, without the need for stitching said mucosa over it.

Such a device allows for creating a useful space in the mucosa for the subsequent positioning of the stump.

A special clinical protocol, defined as "immediate load", represents another alternative with respect to the aforementioned traditional methods.

According to the "immediate load" protocol, after inserting the implant in the bone, the dentist can eliminate the covering use and position the stump directly without waiting for complete bone healing.

According to the immediate load protocol the stump supports a non-final prosthesis, defined as "temporary", which will be replaced by the "final" prosthesis.

Moreover, it must be noted that during the first healing phases of the bone tissue, regardless of the type of screw or technique used, an undesired further reabsorption of the bone, technically defined as "perimplantar reabsorption collar" can be created around the collar and the first implant spires, which can decrease and/or delay the efficacious consolidation of the implant in the patient's bone.

Experience has shown that the natural time of said osseous reconstitution is rather long, in the order of several months.

It can be said that so far it is always necessary to let a variable period of time from eight to twenty-four weeks elapse from the insertion of the implant in the bone to the installation of the final prosthesis.

Document US 2009/029316 A1 discloses:
- an implant with external threaded wall adapted to be implanted in the patient's bone,
- an abutment adapted to support an artificial teeth,
wherein either the implant and/or the abutment can be entirely made of magnetic material in order to stimulate the healing process, whereby said magnetic material forming the abutment can be a sintered rare earth magnet.

US6,032,677 discloses an implant with threaded cavity. A small magnetic insert made of a permanent magnet (NdFeB) is glued to a traditional screw in order to be inserted in the cavity. A variable magnetic field generator is applied in external position on the implant in order to make the magnetic insert vibrate with micromovements to increase the stability of the implant, thus favoring healing and bone growth.

The magnetic insert can be used without external generator to generate a static field only with the purpose of reducing pain. In fact, the magnetic insert is small and unable to generate an adequate magnetic field to reduce healing time.

Moreover, the medical glue used to fix the magnetic insert to the screw is less "powerful" than ordinary glue and the surfaces to be coupled are small; therefore, it is difficult to glue the magnet to the end of the screw. By removing the screw made of two glued pieces, the magnet at the end can be detached because of friction along the walls of the internal cavity of the implant, remaining blocked inside and making the implant clinically useless. EP 1 323 394 discloses a keeper for dental implant. The keeper can be made of any one of the various magnetic dental materials that are not subject to corrosion, which are commonly known for the realization of keepers in dental magnetic attachments. These materials are for instance iron-chrome-molybdenum alloys, soft magnetic stainless steel. These alloys are commonly used to make keepers for magnetic attachments: for instance, SUS 444, SUS MX27, and SUS 417J1 alloys that represent steel alloys known as soft-magnetic alloys. Said materials, such as stainless steel, are known as "soft-magnetic materials" in order to differentiate them from "hard-magnetic materials", such as NdFeB that have different physical and, most of all, magnetic characteristics.

In fact, soft-magnetic materials, such as ferromagnetic alloys, are magnetized by an external field, but once the external field is removed, they tend to lose magnetization rapidly. Hard-magnetic materials, instead, do not lose magnetization and create a magnetic field themselves (permanent magnets). The characteristics that describe soft-magnetic steel alloys are the "saturation magnetic flux density" (Bs) and magnetic permeability. The characteristics that describe the quality of a permanent magnet are the "remanent magnetic flux density" (Br), which is preferably higher than 1 Tesla for NdFeB, the coercitive force (Hc), which is preferably higher than 800 KA/m for NdFeB and the maximum energy product (BHmax), which is preferably higher than 200 KJ/m³ for NdFeB. Definitively, the keeper material and the NdFeB belong to two different categories of magnetic materials.

The keeper of EP 1 323 394 is made of steel, and not of NdFeB, because it must realize permanent attachment with the implant and the prosthesis and must have therefore mechanical characteristics with good performance over time. In fact, the acute-angle end of the ring part of the keeper must be subject to elastic deformation when screwing the keeper to match with the implant and prevent losing the keeper; such elastic deformation is possible with a material such as steel alloy, whereas it would not be possible with NdFeB, which would be probably subject to breakage at the acute-angle end. The magnetic unit of EP 1 323 394 has a magnet nucleus composed of rare earths, such as NdFeB magnets. But the magnetic unit is not shaped as a screw and is not screwed inside the implant.

The specific purpose of the present invention is to considerably reduce the time necessary to complete the installation of a dental implant and/or prevent or repair the "perimplantar reabsorption collar".

Considering that the most critical phase, both in terms of time and result, is the reconstitution of the perimplantar bone tissue, it must be said that the apparatus of the invention is characterized by its capability to favor reconstitution in considerably shorter time and/or with better quality.

The present invention is based on the idea of using a magnetic field to stimulate and/or differentiate the bone cells comprised in said perimplantar tissue, being aware that such a stimulation and/or differentiation is actually capable of ensuring faster and better healing of said tissue.

Said magnetic field can be generated in the implant inserted in the bone and can remain active for the time necessary to guarantee tissue reconstitution. Practically speaking, such a magnetic field is generated by permanently inserting in the cavity of the implant a temporary screw entirely made of a permanent magnet of NdFeB (Neodymium-Iron-Boron), designed to be removed only after the perfect consolidation of the implant in the surrounding bone tissue.

The magnetic insert designed to be received in the implant inserted in the bone is entirely composed of the relevant healing screw or retention screw or covering screw, suitably made of NdFeB.

To obtain a magnetic screw made of NdFeB in one piece, the applicant has encountered some difficulties. As a matter of fact, there is some technical impairment in the realization of a one-piece screw made of NdFeB.

It must be considered that it is not possible to glue one of the magnetic inserts available on the market at the end of the screw. Magnetic inserts of suitable dimensions must be milled to obtain a permanent magnet that is adjusted to the internal cavity of the implant and then thread at the end of the magnetic insert must be obtained. The thread can be less resistant than an ordinary non-magnetic screw and therefore less reliable over time. However, considering the temporary use of the magnetic screw (about 1-2 months), the thread obtained in the magnet is sufficient to guarantee the necessary stability.

The realization of a NdFeB screw is more difficult than a screw made of steel alloy, since NdFeB is more difficult to be machined (for example, magnets can only be machined with diamond point mills and under constant water cooling because high temperatures cause magnetization loss). The thread of the NdFeB screw can be less resistant than the thread of the steel screw and is less reliable over time. However, considering the temporary use of the magnetic screw (about 1-2 months) the thread obtained in the magnet is sufficient to guarantee stability and retention for the necessary time. Moreover, since the NdFeB screw contains neodymium that is easily subjected to oxidation, such screw must be completely or partially coated to increase anti-corrosion properties (in the part in contact with oral mucosa, the part opposite to the threaded part that is screwed inside the implant). Coating is made with a thin layer of nickel, copper, zinc, tin, silver, gold, titanium, resins or compounds of said materials, etc. Said coating must be sufficiently thin, for example lower than 50 micron, not to impair the magnetic qualities of the screw. The coating procedure is not necessary with steel alloys.

The screw entirely made of NdFeB permanent magnet according to the invention has various advantages with respect to an insert made of permanent magnet fixed to an ordinary screw.

As a matter of fact, said screw entirely made of permanent magnet is made in such a way to adjust to the internal cavity of the implant, so that the space available inside the implant is completely occupied by magnetic material. This allows for generating a magnetic field around the implant with higher intensity than the one generated by a smaller magnet as it necessarily is when using two separate pieces. The intensity of the magnetic field generated by the one-piece magnetic screw is suitable to produce bone healing as desired.

No glue is used, which, although it is biocompatible, can be irritating and uncomfortable to use for the operator. The use of the one-piece magnetic screw makes the removal and insertion of the same screw easier.

Moreover, being the magnetic screw a one-piece screw, also the head of the magnetic screw attracts the end of the screwdriver that is used to insert the screw in the internal cavity of the implant, creating a bond that minimizes the risk that the screw may fall in the oral cavity and be swallowed by the patient that during the insertion.

The screw entirely made of NdFeB has higher magnetic characteristics than a screw made of soft magnetic material. Said higher magnetic characteristics are necessary to generate a magnetic field around the implant with high intensity with respect to the one generated by a screw made of ferromagnetic steel. The intensity of the magnetic field generated by the NdFeB screw is suitable to produce bone healing as desired. Being a permanent magnet, the NdFeB screw maintains the magnetic field for the entire time period necessary for bone healing, whereas a screw made of ferromagnetic steel loses magnetization rapidly.

The screw completely made of NdFeB is temporary: it must be used for 1-2 months to favor bone growth and healing, and is then removed. After such a period, it is possible to insert a final screw made of a material other than magnetic steel alloys with better mechanic characteristics in view of the long life (i.e. titanium, which is more compatible than steel or a gold retention screw that can be tightened with lower force thus preserving and increasing the life of internal attachment system of the implants).

For purposes of clarity, the description of the invention continues with reference to the enclosed drawing, which is intended for purposes of illustration only and not in a limiting sense, wherein:
- figures 1A and 1B are diagrammatic views that show, in two subsequent operating phases, the installation of a first embodiment of the apparatus of the invention (using a magnetic covering screw);
- figures 2A and 2B are diagrammatic views that show, in two subsequent operating phases, the installation of a second embodiment of the apparatus of the invention (using a magnetic healing screw);
- figures 3A and 3B are diagrammatic views that show, in two subsequent operating phases, the installation of a third embodiment of the apparatus of the invention (using a magnetic retention screw);

Fig. 4A is a diagrammatic view that shows the magnetic field expressed in Gauss in contact with the external surface of a magnetic screw made of NdFeB;

Fig. 4B is a diagrammatic view that shows the magnetic field expressed in Gauss in contact with the external surface of an implant where the magnetic screw of Fig. 4A is inserted; and

Fig. 4C is a diagrammatic view that shows the magnetic field expressed in Gauss at 1 m distance from the surface of the implant of Fig. 4B.

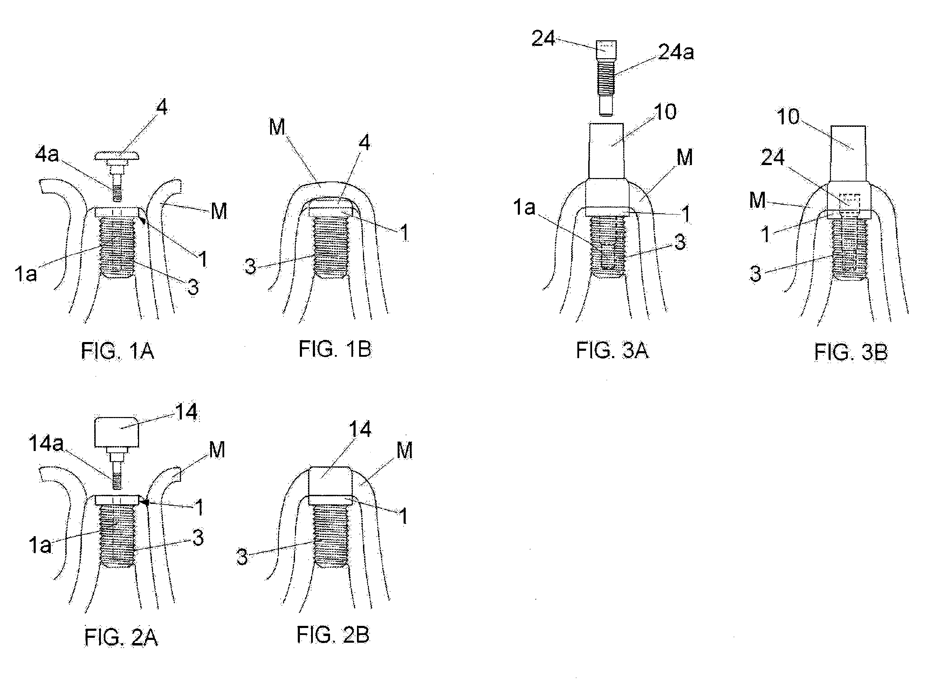

Referring to figures 1A and 1B, the apparatus of the invention is composed of a traditional implant (1) for dental prostheses. The installation (1) consists in an empty metal cylindrical pin provided with wall with external thread (3) and axial cavity (1 a) with internal thread accessible from above.

The second component of the apparatus consists in a corresponding metal covering screw (4), provided with threaded stem (4a) adapted to be engaged on the internal threaded walls (1 a) of said implant (1).

The authentic peculiarity of said apparatus consists in the fact that the covering screw (4) is made of NdFeB (Neodymium-Iron-Boron) permanent magnet.

Because of its magnetic properties, a similar covering screw (4) can generate a magnetic field all around the implant (1) that favors a faster reconstitution of the surrounding bone tissue.

The covering screw (4) is provided with thin head and is usually "coated" with the gingival mucosa (M) for the entire time that is necessary for consolidation of the implant (1) in the bone.

Now the screw (4) can be normally removed, after making an incision on the mucosa (M) to leave space to the threaded stem of a final stump that represents the third element of the apparatus.

Figures 2A and 2B show the embodiment of the apparatus of the invention that comprises, instead of said covering screw (4), a magnetic healing screw (14) provided with threaded stem (14a) adapted to be engaged on the internal threaded walls (1 a) of the implant (1).

In particular, Figure 2B shows that the head of said screw (14) is given high thickness in such a way that, once it is installed, it usually remains "outside" the gingival mucosa (M).

Figures 3A and 3B show the embodiment of the apparatus of the invention that comprises, instead of said covering screw (4) and healing screw (14), a magnetic retention screw (24) adapted to be engaged on the internal threaded walls (1 a) of the implant (1), after crossing, from up down, an axial hole obtained on a corresponding stump (10).

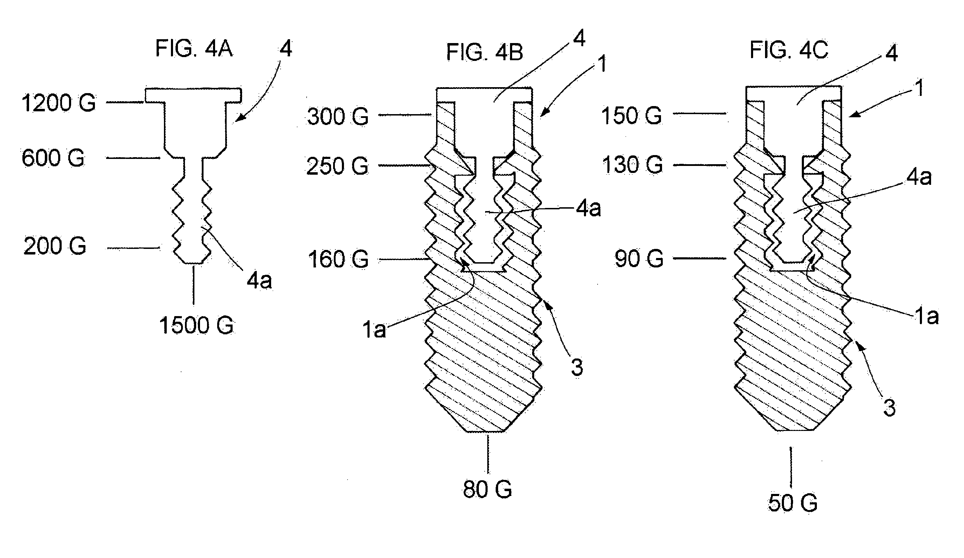

In particular, Figure 3A is an exploded view of said screw (24) before it is inserted in the corresponding stump (10), whereas Figure 3B shows the same screw in operating condition, in which it fixes the stump (10) to the implant (1). Referring to Fig. 4A, the magnetic screw (4) entirely made of NdFeB guarantees a maximum magnetic field of 1500 G, exactly in the lower end. Referring to Fig. 4B, when the screw (4) is inserted in the implant (1), the minimum magnetic field on the external surface of the implant is at the lower end of the implant and is 80 G. In fact, the higher thickness of the implant (1) is in the lower part.

Referring to Fig. 4C, a magnetic field of 50 Gauss is obtained at 1 mm distance from the lower surface of the implant (1), which is sufficient to obtain the desired healing effects of the bone. Therefore, the present invention is efficacious for magnetic fields equal to or higher than 50 Gauss at 1 mm distance from the external surface of the implant. Advantageously, in order to obtain such a result, the maximum thickness of the implant must be lower than 10 mm.

It must be considered that the magnetic inserts and keepers provide magnetic fields lower than 50 G at 1 mm distance from the implant.

## Claims

1. Apparatus for dental implants comprising:
- implant (1) with external threaded wall (3) adapted to be implanted in the patient's bone, said implant being provided with cylindrical axial cavity with internal thread (1 a) accessible from above,
- stump (10) adapted to support a dental prosthesis and provided with lower threaded stem adapted to be helicoidally coupled with the internal thread of said cavity (1 a) of the implant (1), and
- temporary screw (4; 14; 24) comprising a threaded stem (4a, 14a, 24a) adapted to be helicoidally coupled with the internal thread of said cavity (1 a) of the implant (1), and designed to be maintained inside the implant (1) until reconstruction of the patient's bone tissue,
apparatus **characterized in that**
said temporary screw (4; 14; 24) is entirely made, in one piece, of NdFeB (Neodymium-Iron-Boron) permanent magnet.

2. Apparatus as claimed in claim 1, **characterized in that** said temporary screw (4; 14; 24) is coated, at least partially, with a thin coating layer of nickel, copper, zinc, tin, silver, gold, titanium, resins or compounds of said materials.

3. Apparatus as claimed in claim 2, **characterized in that** said thin coating layer is lower than 50 micron.

4. Apparatus as claimed in any one of the above claims, **characterized in that** the minimum magnetic field obtained at 1 mm distance from the external surface of said implant (1) is higher than or equal to 50 Gauss.

5. Apparatus as claimed in any one of the above claims, **characterized in that** the maximum thickness of said implant (1) is lower than 10 mm.

6. Apparatus as claimed in any one of the above claims, **characterized in that** said temporary screw (4) is a covering screw provided with thin head adapted to be coated by the patient's gingival mucosa (M).

7. Apparatus as claimed in any one of claims 1 to 5, **characterized in that** said temporary screw (14) is a healing screw provided with head with high thickness to remain outside the patient's gingival mucosa (M).

8. Apparatus as claimed in any one of claims 1 to 5, **characterized in that** said temporary screw (24) is a retention screw adapted to fix the stump (10) to said implant (1).

## Patentansprüche

1. Vorrichtung für Dentalimplantate umfassend:
- ein Implantat (1) mit einer äußeren Gewindewand (3), das dazu geeignet ist, in den Knochen des Patienten implantiert zu werden, wobei das Implantat eine axiale zylindrische Kavität mit Innengewinde (1 a) aufweist, die von oben zugänglich ist,
- einen Stumpf (10), der dazu geeignet ist, eine Zahnprothese zu tragen und unterseitig mit einem Gewindezapfen versehen ist, der dazu geeignet ist, schraubenartig mit dem Innengewinde der Kavität (1 a) des Implantats (1) gekoppelt zu werden, und
- eine provisorische Schraube (4; 14; 24), umfassend einen Gewindezapfen (4a, 14a, 24a), der in der Lage ist, schraubenartig mit dem Innengewinde der Kavität (1 a) des Implantats (1) gekoppelt zu werden und dazu bestimmt ist, bis zum Wiederaufbau des Knochengewebes des Patienten im Implantat (1) zu verbleiben,
Vorrichtung, **dadurch gekennzeichnet, dass**
die provisorische Schraube (4; 14; 24) vollkommen einstückig aus einem NdFeB-(Eisen-Neodym-Bor)-Permanentmagnet hergestellt ist.

2. Vorrichtung nach Anspruch 1, **dadurch gekennzeichnet, dass** die provisorische Schraube (4; 14; 24) mindestens teilweise mit einer dünnen Schicht aus Nickel, Kupfer, Zink, Zinn, Silber, Gold, Titan, Harzen oder Verbindungen dieser Materialien beschichtet ist.

3. Vorrichtung nach Anspruch 2, **dadurch gekennzeichnet, dass** die Beschichtung dünner als 50 µm ist.

4. Vorrichtung nach einem beliebigen der vorstehenden Ansprüche, **dadurch gekennzeichnet, dass** das Mindest-Magnetfeld, das in einem Abstand von 1 mm von der Außenfläche des Implantats (1) erzeugt wird, größer oder gleich 50 Gauss ist.

5. Vorrichtung nach einem beliebigen der vorstehenden Ansprüche, **dadurch gekennzeichnet, dass** die maximale Dicke des Implantats (1) geringer als 10 mm ist.

6. Vorrichtung nach einem beliebigen der vorstehenden Ansprüche, **dadurch gekennzeichnet, dass** die provisorische Schraube (4) eine Deckschraube mit einem dünnen Kopf ist, der dazu bestimmt ist, von der Schleimhaut (M) des Patienten bedeckt zu werden.

7. Vorrichtung nach einem beliebigen der Ansprüche 1 bis 5, **dadurch gekennzeichnet, dass** die provisorische Schraube (14) eine Einheilschraube mit einem dicken Kopf ist, um außerhalb der Schleimhaut (M) des Patienten zu bleiben.

8. Vorrichtung nach einem beliebigen der Ansprüche 1 bis 5, **dadurch gekennzeichnet, dass** die provisorische Schraube (24) eine Halteschraube ist, um den Stumpf (10) an dem Implantat (1) zu befestigen.

## Revendications

1. Dispositif pour implants dentaires comprenant :
- un implant (1) comportant une paroi externe filetée (3), apte à être introduit dans l'os du patient, ledit implant ayant une cavité axiale cylindrique avec filetage interne (1a) accessible par le haut,
- un moignon (10) apte à supporter une prothèse dentaire et doté inférieurement d'une tige filetée adaptée pour s'accoupler hélicoïdalement avec le filetage interne de ladite cavité (1 a) de l'implant (1), et
- une vis temporaire (4; 14; 24) comprenant une tige filetée (4a, 14a, 24a), capable de s'accoupler hélicoïdalement avec le filetage interne de ladite cavité (1a) de l'implant (1), et destinée à être maintenue à l'intérieur de l'implant (1) jusqu'à la reconstruction du tissu osseux du patient,
dispositif **caractérisé en ce que**
ladite vis temporaire (4; 14; 24) est entièrement réalisée en une seule pièce, en aimant permanent de NdFeB (Néodyme - Fer - Bore).

2. Dispositif selon la revendication 1, **caractérisé en ce que** ladite vis temporaire (4; 14; 24) est revêtue, au moins partiellement, d'une mince couche de protection de Nickel, Cuivre, Zinc, Étain, Argent, Or, Titane, résines ou composés des dits matériaux.

3. Dispositif selon la revendication 2, **caractérisé en ce que** ladite mince couche de revêtement est inférieure à 50 microns.

4. Dispositif selon l'une quelconque des revendications précédentes, **caractérisé en ce que** le champ magnétique minimal obtenu à 1 mm de distance de la surface extérieure dudit implant (1) est supérieur ou égal à 50 Gauss.

5. Dispositif selon l'une quelconque des revendications précédentes, **caractérisé en ce que** l'épaisseur maximale dudit implant (1) est inférieure à 10 mm.

6. Dispositif selon l'une quelconque des revendications précédentes, **caractérisé en ce que** ladite vis temporaire (4) est une vis de couverture munie d'une tête mince destinée à être recouverte par la muqueuse gingivale (M) du patient.

7. Dispositif selon l'une quelconque des revendications de 1 à 5, **caractérisé en ce que** ladite vis temporaire (14) est une vis de cicatrisation munie d'une tête avec une grande épaisseur pour rester à l'extérieur de la muqueuse gingivale (M) du patient.

8. Dispositif selon l'une quelconque des revendications de 1 à 5, **caractérisé en ce que** ladite vis temporaire (24) est une vis de retenue adaptée pour fixer le moignon (10) au dit implant (1).
